# EUROPÄISCHE PATENTSCHRIFT

(11) **EP 2 425 304 B1**
(45) Veröffentlichungstag und Bekanntmachung des Hinweises auf die Patenterteilung: **05.12.2012**
(21) Anmeldenummer: 10716540.9
(22) Anmeldetag: 29.04.2010
(51) Int. Cl.: G05B 9/02

(54) **STEUERSYSTEM ZUM SICHEREN BETREIBEN VON MINDESTENS EINER FUNKTIONSKOMPONENTE**
CONTROL SYSTEM FOR SAFELY OPERATING AT LEAST ONE FUNCTIONAL COMPONENT
SYSTÈME DE COMMANDE POUR FAIRE FONCTIONNER DE MANIÈRE FIABLE AU MOINS UN COMPOSANT FONCTIONNEL

(30) Priorität: 02.05.2009 DE 102009019792
(43) Veröffentlichungstag der Anmeldung: 07.03.2012
(73) Patentinhaber: Leopold Kostal GmbH & Co. KG, 58513 Lüdenscheid (DE)
(72) Erfinder: EDEL, Jan, 58513 Lüdenscheid (DE)
(74) Vertreter: Kerkmann, Detlef
(86) Internationale Anmeldenummer: PCT/EP2010/055864
(87) Internationale Veröffentlichungsnummer: WO 2010/127996

(56) Entgegenhaltungen:
- DE-A1- 10 049 911
- DE-A1-102004 036 087
- US-A1- 2002 105 428

## Beschreibung

Die Erfindung betrifft ein Steuersystem zum sicheren Betreiben von mindestens einer Funktionskomponente, mit wenigstens einer Funktionssteuereinheit zur Ansteuerung der mindestens einen Funktionskomponente, mit mindestens einem Sensor, mit einem Datenbus, der wenigstens ein aufbereitetes Sensorsignal an die wenigstens eine Funktionssteuereinheit überträgt, wobei aus einem oder mehreren Sensorsignalen ein Betriebsmodus für die wenigstens eine Funktionssteuereinheit festgelegt wird, in dem die mindestens eine Funktionskomponente sicher betrieben werden kann.

Ein derartiges Steuersystem ist in der deutschen Offenlegungsschrift DE 10 2004 036 087 A1 beschrieben. Das vorbekannte Steuersystem sieht verschiedene Betriebsmodi vor, die eine spezifische Anpassung der Funktionskomponenten an jeweils eine erkannte Betriebssituation ermöglichen. Vorgesehene Betriebsmodi sind beispielsweise ein Schlechtwettermodus, ein Geländemodus, ein Bergmodus oder ein Autobahnmodus. Vorgeschlagen wird insbesondere die Übermittlung eines gültigen Betriebsmodus über ein Datenbusprotokoll ohne eine direkte Adressierung eines Empfängers. Dadurch sind die Betriebsmodi von der Konfiguration unterschiedlicher Fahrzeugmodelle unabhängig. Die Komponente, die den Betriebsmodus sendet, muss dazu nicht die Anzahl und Art der Empfängerkomponenten kennen. Die zu jedem Betriebsmodus zugehörigen Einstellungen für die Funktionskomponenten sind vorzugsweise in deren Steuereinheiten hinterlegt. Das Steuersystem ermöglicht somit eine Anpassung der Funktionalität an äußere Bedingungen, die von den Sensoren erfasst werden und durch Sensordaten repräsentiert sind.

Problematisch dabei ist, dass die Erfassung von Sensordaten fehlerhaft sein kann. Die DE 10 2004 036 087 A1 beschäftigt sich allerdings nicht mit der Erkennung von fehlerhaften Sensordaten oder sonstigen Systemfehlem und auch nicht damit, wie das Steuersystem auf auftretende Fehler reagieren soll.

Die Druckschrift US 2002/0105428 A1 offenbart ein Verfahren zum Feststellen, ob ein Sensorsignal gültig ist oder nicht. Das Verfahren beinhaltet, dass eine Vorrichtung die Qualität von Sensorsignalen bewertet und eine die Sicherheitsqualität der Sensorsignale repräsentierende Bewertungsgröße erzeugt und diese auf einen Datenbus gibt.

Zur Beurteilung der Zuverlässigkeit von Sicherheitsfunktionen elektrischer, elektronischer oder programmierbar elektronischer Systeme definiert der Standard IEC 61508 so genannte Sicherheitsanforderungsstufen, die auch als Sicherheitsintegritätslevel, abgekürzt SIL, bezeichnet werden. Abgeleitete Normen wie die ISO 26262 für die Automobilbranche verwenden dafür die Abkürzung ASIL. Der Sicherheitsintegritätslevel stellt ein Maß für die funktionale Sicherheit des Systems in Abhängigkeit von dem Risiko und der Gefährdung dar, die von der Systemfunktion für Leib und Leben ausgehen können. Funktionen oder Prozesse mit einer geringeren Gefährdung werden prinzipiell durch einen Sicherheitskreis mit einem geringeren Sicherheitsintegritätslevel aufgebaut als Prozesse mit höherer Gefährdung.

Zu den üblichen Sicherheitskonzepten gehört im Falle eines kritischen Fehlers oder Ausfalls, die Gesamtfunktion durch Abschalten in einen sicheren Zustand zu überführen. Für Sensoren bedeutet dies, dass auch weniger oder gar nicht sicherheitskritische Empfänger der Sensordaten ihre gesamte Funktion verlieren. Nachteilig ist dabei ein fehlendes Degradationskonzept, um im Falle einer nicht mehr ausreichenden funktionalen Sicherheit für den einen bestimmten Datenempfänger nicht gleich sämtliche mit dem Sensor in Zusammenhang stehenden Funktionen und/oder Empfänger abschalten zu müssen.

Bisher wurde in Sicherheitskonzepten elektronischer Sensoren im Falle eines detektierten Fehlers, der zur Verletzung des höchsten, für eine Gesamtfunktion spezifizierten Sicherheitsintegritätslevel führt, stets die Verwertbarkeit der Sensorinformation unterbunden, beispielsweise durch eine radikale Abschaltung des Sensors. Auf diese Weise können andere Funktionen, die von derselben Sensorinformation abhängig sind, ebenfalls nicht weiter funktionieren, denn es fehlt eine Information über den verbleibenden Level der Sicherheitsintegrität der gelieferten Sensorinformation. Ohne diese Information reduziert sich der normgerecht nachgewiesene Sicherheitsintegritätslevel zu Null und zumindest teilweise sicherheitskritische Anwendungen müssen ihre Funktion einstellen. Hierdurch geht wertvolle Verfügbarkeit verloren.

Es stellte sich die Aufgabe, ein Steuersystem zu schaffen, welches die vorgenannten Nachteile vermeidet und ausgehend von den zur Verfügung stehenden Sensorsignalen, eine zuverlässige Bewertung des Betriebsmodus ermöglicht.

Diese Aufgabe wird erfindungsgemäß dadurch gelöst, dass eine Vorrichtung die Qualität der Sensorsignale bewertet und eine die Sicherheitsqualität der Sensorsignale repräsentierende Bewertungsgröße erzeugt und diese auf den Datenbus gibt, dass die wenigstens eine Funktionssteuereinheit die mindestens eine Funktionskomponente in Abhängigkeit vom aktuell empfangenen Wert des wenigstens einen aufbereiteten Sensorsignals und dem Wert der zugehörigen Bewertungsgröße steuert, und dass der Wert der Bewertungsgröße jeweils von der wenigstens einen Funktionssteuereinheit als ein normgerechter Sicherheitsintegritätslevel interpretierbar ist.

Der Gegenstand der Erfindung ist die Einführung einer Bewertungsgröße als einer genügend selbst abgesicherten Begleitinformation, mit deren Hilfe der Empfänger einer Sensorinformation den im Normalfall gegebenen oder den im bestimmten Fehlerfall verbleibenden Sicherheitsintegritätslevel einer Sensorinformation erkennen kann. Mit dieser Bewertungsgröße ist der Empfänger dann durch Vergleich mit eigenen Sicherheitsansprüchen in der Lage, über eine sicherheitstechnisch vertretbare Fortführung seiner Funktion zu entscheiden. Die Wahrscheinlichkeit der Verfügbarkeit der Gesamtfunktion steigt dadurch deutlich an.

Auf der Sensorseite muss für den Fehlerfall natürlich der entsprechend verbliebene Sicherheitsintegritätslevel nachgewiesen worden sein, der sich unter Aussparung der fehlerhaften Komponente noch ergibt.

Die Bewertungsgröße kann vorteilhaft aus einem 8 oder 16 Bit breiten digitalen Datenwort bestehen, für das ein zwischen Sensor und Empfänger vereinbarter Wert einen bestimmten Sicherheitsintegritätslevel bedeutet.

Im folgenden soll die Erfindung anhand der Zeichnung beispielhaft dargestellt und erläutert werden. Es zeigen:
- Figur 1: eine Prinzipdarstellung eines erfindungsgemäßen Steuersystems,
- Figur 2: ein Anwendungsbeispiel eines Steuersystems.

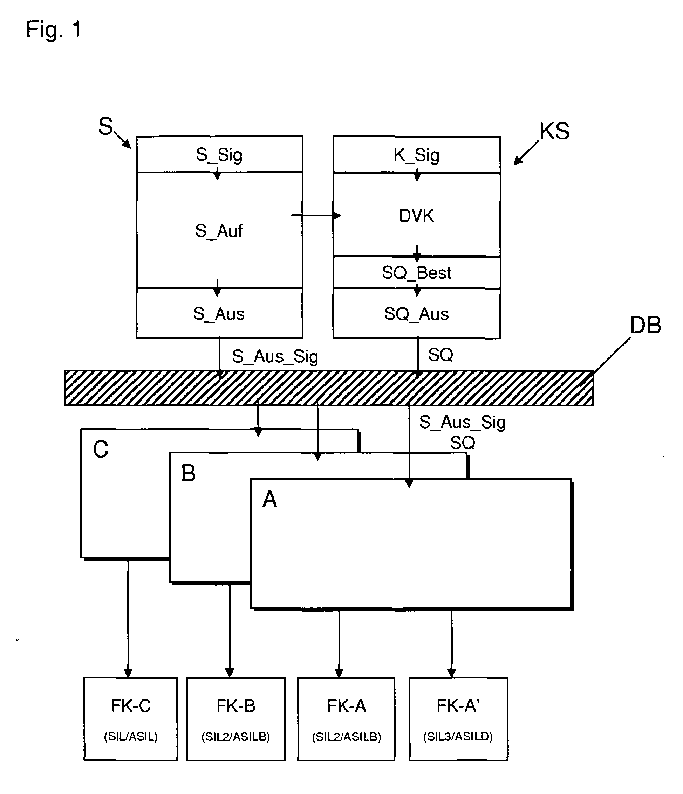

Die Figur 1 zeigt in einer schematischen Darstellung ein Ausführungsbeispiel des erfindungsgemäßen Steuersystems. Das Steuersystem weist einen ersten Sensor S auf, welcher eine Sensorgröße erfasst und entsprechende

Sensorsignale S_Sig erzeugt. Durch eine sensorinterne Sensorsignalaufbereitung S_Auf werden die Sensorsignale S_Sig zu digitalen Sensorsignalen S_Aus_Sig weiterverarbeitet und durch eine Sensorsignalausgabe S_Aus auf einen Datenbus DB gegeben.

Das Steuersystem weist zudem einen zweiten Sensor auf, der zu Kontrollzwecken die gleiche Sensorgröße wie der Sensor S erfasst und daher als Kontrollsensor KS bezeichnet ist. Kontrollsensorsignale K_Sig gelangen zu einer Diagnose-, Vergleichs- und Kontrolleinheit DVK, welche die Kontrollsensorsignale K_Sig verarbeitet und mit den aufbereiteten Sensorsignalen des ersten Sensors S vergleicht. Außerdem bewertet die Diagnose-, Vergleichs- und Kontrolleinheit DVK die Signale des Sensors S und des Kontrollsensors KS hinsichtlich ihrer Plausibilität und generiert eine Bewertungsgröße SQ, welche eine Aussage über die Qualität und Vertrauenswürdigkeit der auf den Datenbus gegebenen aufbereiteten Sensorsignale S_Aus_Sig macht.

Die Generierung der Bewertungsgröße SQ anhand von Signalen eines Kontrollsensors KS ist natürlich rein beispielhaft. Im Sinne der Erfindung können auch andere Verfahrensweisen zur Generierung einer Bewertungsgröße SQ vorgesehen werden, etwa durch Plausibilitätsüberprüfungen innerhalb eines einzigen Sensors oder anhand von gemeinsamen Auswertungen mehrerer unterschiedlicher Sensorgrößen. Die Auswertungen können anhand von hardwaretechnischen oder vorzugsweise auch in Kombination von hardware- und softwaretechnischen Mitteln erfolgen, wobei diese Mittel einem oder mehreren Sensoren zugeordnet oder auch durch eine eigenständige Rechnerhardware realisiert sein können.

Wesentlich ist, dass zu jedem Sensorsignal S_Aus_Sig eine diesem Sensorsignal S_Aus_Sig zugeordnete Bewertungsgröße SQ, welche die sicherheitsnormgerechte Qualität des jeweiligen Sensorsignals S_Aus_Sig charakterisiert, erzeugt und auf den Datenbus DB gegeben wird.

Das Sensorsignal S_Aus_Sig und die jeweils zugeordnete Bewertungsgröße SQ werden über den Datenbus DB mehreren Funktionssteuereinheiten (A, B, C) zur Verfügung gestellt. Die Funktionssteuereinheiten (A, B, C) verwirklichen jeweils eine oder mehrere Funktionen bei der Ansteuerung von Funktionskomponenten (FK-A, FK-A', FK-B, FK-C) und können beispielsweise durch Funktionsprozeduren in einem Rechnersystem oder auch jeweils durch ein einzelnes Steuergerät realisiert sein.

Die von den Funktionssteuereinheiten (A, B, C) gesteuerten Funktionskomponenten (FK-A, FK-A', FK-B, FK-C) sind in der Regel

Aktuatoren, beispielsweise Stellmotore oder Ventile, die zur Ausführung bestimmter Funktionen vorgesehen sind, können aber auch Anzeigeeinrichtungen sein. Die Funktionskomponenten (FK-A, FK-A', FK-B, FK-C) sind in der Figur 1 durch einfache Blocksymbole dargestellt. In jedem Block ist in Klammern der zur sicheren Ausführung der jeweiligen Funktion erforderliche Sicherheitsintegritätslevel (SIUASIL, SIL2/ASILB, SIL3/ASILD) angegeben. So benötigen die von der Funktionssteuereinheit A gesteuerten Funktionskomponenten FK-A und FK-A' zur Ausführung ihrer Funktionen unterschiedliche Sicherheitsintegritätslevel, nämlich SIL2/ASILB bzw. SIL3/ASILD.

Die Funktionskomponente FK-B erfordert einen Sicherheitsintegritätslevel SIL2/ASILB und die Funktionskomponente FK-C kann auch ohne qualifizierten Sicherheitsintegritätslevel SIUASIL ihre Funktion ausführen.

Allen Funktionskomponenten (FK-A, FK-A', FK-B, FK-C) werden die Signale des Sensors S als Eingangsgröße zugeführt, welche sie als aufbereitetes Sensorsignal S_Aus_Sig parallel über den Datenbus DB erhalten. Aufgrund der jedem Sensorsignal S_Aus_Sig zugeordneten Bewertungsgröße SQ, die ebenfalls parallel über den Datenbus DB verteilt wird, entscheidet jede Funktionssteuereinheit (A, B, C) sicherheitstechnisch selbständig, ob die zugeordneten Funktionskomponenten (FK-A, FK-A', FK-B, FK-C) unter Verwendung des Sensorsignal S_Aus_Sig angesteuert werden dürfen oder nicht.

Die Bewertungsgröße SQ weist dazu einen Wert auf, der entweder direkt einen Sicherheitsintegritätslevel darstellt oder dem die Funktionssteuereinheiten (A, B, C) ohne nennenswerten Rechenaufwand einen Sicherheitsintegritätslevel zuordnen können.

Entspricht beispielsweise die Bewertungsgröße SQ einem Sicherheitsintegritätslevel von SIL2/ASILB, so signalisiert dieses der Funktionssteuereinheit A, dass der Qualität des Sensorsignals S_Aus_Sig zwar für einen sicheren Betrieb der Funktionskomponenten FK-A ausreicht, nicht jedoch zum Betrieb der Funktionskomponente FK-A'. Die Funktionssteuereinheit A stellt daher den Betrieb der Funktionskomponente FK-A' ein und steuert nur noch die Funktionskomponente FK-A weiter an. Für die Funktionssteuereinheiten B und C ist dieser Wert der Bewertungsgröße SQ ausreichend, um die Funktionskomponenten FK-B und FK-C zu betreiben.

Verringert sich nun Bewertungsgröße SQ auf einen Wert, dem ein Sicherheitslevel kleiner als SIL2/ASILB entspricht, so stellt auch die Funktionssteuereinheit B die Ansteuerung der ihr zugeordneten Funktionskomponente FK-B ein, so dass nun nur noch die Funktionssteuereinheit C die Funktionskomponente FK-C, die aufgrund des ihr zugeordneten Sicherheitsintegritätslevel SIL/ASIL keine besondere Sicherheitsrelevanz aufweist, weiter ansteuert.

Es erfolgt somit eine abgestufte Degradation in Abhängigkeit von einer Qualitätseinstufung der vorliegenden Sensorsignale. Besonders vorteilhaft ist, dass jede Funktionssteuereinheit (A, B, C) für sich über den Betrieb der ihr zugeordneten Funktionskomponenten (FK-A, FK-A', FK-B, FK-C) autonom entscheidet. Die Art und Anzahl der mit dem Datenbus DB verbundenen Funktionssteuereinheiten (A, B, C) braucht daher nicht einer zentralen Instanz bekannt zu sein und kann überdies leicht geändert werden, ohne dass hierdurch die Funktion des Steuersystems beeinträchtigt würde.

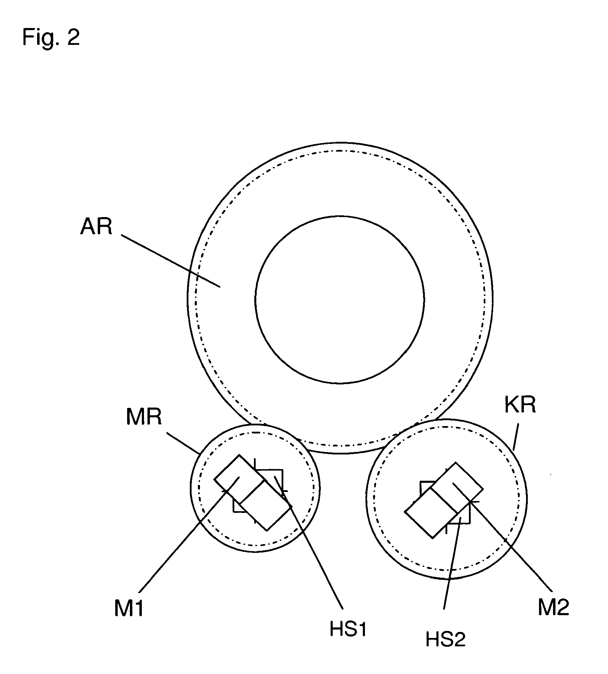

Die Figur 2 zeigt als ein Anwendungsbeispiel einen nach einem Noniusprinzip funktionierenden Drehwinkelsensor. Ein derartiger Drehwinkelsensor ist beispielsweise aus der deutschen Offenlegungsschrift DE 10 2006 023 286 A1 bekannt und dort im Detail beschrieben.

Der dargestellte Drehwinkelsensor besteht aus einem Antriebsrad AR, welches mit einer nicht dargestellten Welle, deren Drehposition erfasst werden soll, verbunden ist. Das Antriebsrad AR ist als ein Zahnrad ausgebildet, mit dem zwei kleinere Zahnräder, nachfolgend als Messrad MR und Kontrollrad KR bezeichnet, in Eingriff stehen. Auf der oberen Seite sowohl des Messrades MR als auch des Kontrollrades ist jeweils ein stabförmiger Dauermagnet (M1, M2) angebracht, dessen Drehstellung von jeweils einem stationär angeordneten Hallsensor (HS1, HS2) erfasst wird.

Bei einer Drehung der Welle treibt das Antriebsrad AR sowohl das Messrad MR als auch das Kontrollrad KR an. Da das Messrad MR und das Kontrollrad KR unterschiedliche Radien und damit auch eine unterschiedliche Anzahl von Zähnen aufweisen, werden diese beiden Zahnräder (MR, KR) um unterschiedliche Drehwinkel verdreht.

Da die Hallsensoren (HS1, HS2) die Drehwinkel beider Zahnräder (MR, KR) erfassen, kann geprüft werden, ob der Drehwinkel des Kontrollrades KR in einem plausiblen Verhältnis zum Drehwinkel des Messrades MR steht und damit eine korrekte Funktion der beiden Winkelsensoren und damit eine korrekte Winkelerfassung der Welle angenommen werden können.

Die Erfassung zweier Drehwinkel durch das Messrad MR und das Kontrollrad KR nach dem Noniusprinzip ermöglicht darüber hinaus die Erfassung der Winkelstellung des Antriebsrads AR über mehrere Umdrehungen, allerdings nur sofern die beiden einzelnen erfassten Drehwinkel vertrauenswürdig sind.

Fällt nun im Betrieb die plausible Evaluierung des Kontrollrades KR weg, z. B. durch einen internen Fehler des zugehörigen Hallsensors HS2, so kann mithilfe einer Bewertungsgröße trotzdem ein, wenn auch minderer Sicherheitsintegritätslevel für die errechnete Sensorinformation angegeben werden und damit zumindest noch Funktionen ausgeführt werden, für die relativ erfasste Drehwinkel des Messrades MR ausreichend ist. Bei einer Verwendung dieses Drehwinkelsensors als Lenkwinkelsensor in einem Kraftfahrzeug können so immerhin noch die weniger oder gar nicht sicherheitskritischen Funktionen, die den Lenkwinkel benötigen, zugelassen werden. Sie müssen dann nicht abgeschaltet oder eingeschränkt werden, wie es ohne die Auswertung der Bewertungsgröße SQ notwendig wäre.

### Bezugszeichen

Zur Figur 1
- A, B, C: Funktionssteuereinheiten
- DB: Datenbus
- DVK: Diagnose-, Vergleichs- und Kontrolleinheit (Vorrichtung)
- FK-A, FK-A', FK-B, FK-C: Funktionskomponenten
- KS: Kontrollsensor
- K_Sig: Kontrollsensorsignale
- S: Sensor
- S_Auf: Sensorsignalaufbereitung
- S_Aus: Sensorsignalausgabe
- S_Sig: Sensorsignale
- S_Aus_Sig: (aufbereitete) Sensorsignale
- SIUASIL, SIL2/ASILB, SIL3/ASILD: Sicherheitsintegritätslevel
- SQ: Bewertungsgröße (Bewertungsgröße)
- SQ_Aus: Bewertungsgrößeausgabe
- SQ-Best: Bewertungsgrößebestimmung

Zur Figur 2
- AR: Antriebsrad
- HS1, HS2: Hallsensoren
- KR: Kontrollrad (Zahnrad)
- MR: Messrad (Zahnrad)
- M1, M2: Dauermagnete

## Patentansprüche

1. Steuersystem zum sicheren Betreiben von mindestens einer Funktionskomponente (FK-A, FK-A', FK-B, FK-C),
mit wenigstens einer Funktionssteuereinheit (A, B, C) zur Ansteuerung der mindestens einen Funktionskomponente (FK-A, FK-A', FK-B, FK-C),
mit mindestens einem Sensor (S, KS),
mit einem Datenbus (DB), der wenigstens ein aufbereitetes Sensorsignal (S_Aus_Sig) an die wenigstens eine Funktionssteuereinheit (A, B, C) überträgt,
wobei aus einem oder mehreren Sensorsignalen (S_Sig, K_Sig) ein Betriebsmodus für die wenigstens eine Funktionssteuereinheit (A, B, C) festgelegt wird, in dem die mindestens eine Funktionskomponente (FK-A, FK-A', FK-B, FK-C) sicher betrieben werden kann,
**dadurch gekennzeichnet,**
**dass** eine Vorrichtung (DVK) die Qualität der Sensorsignale (S_Sig) bewertet und eine die Sicherheitsqualität der Sensorsignale (S_Sig) repräsentierende Bewertungsgröße (SQ) erzeugt und diese auf den Datenbus (DB) gibt,
**dass** die wenigstens eine Funktionssteuereinheit (A, B, C) die mindestens eine Funktionskomponente (FK-A, FK-A', FK-B, FK-C) in Abhängigkeit vom aktuell empfangenen Wert des wenigstens einen aufbereiteten Sensorsignals (S_Aus_Sig) und dem Wert der zugehörigen Bewertungsgröße (SQ) steuert,
und **dass** der Wert der Bewertungsgröße (SQ) jeweils von der wenigstens einen Funktionssteuereinheit (A, B, C) als ein normgerechter Sicherheitsintegritätslevel (SIL/ASIL, SIL2/ASILB, SIL3/ASILD) interpretierbar ist.

2. Steuersystem nach Anspruch 1, **dadurch gekennzeichnet, dass** ein Kontrollsensor (KS) ein Kontrollsensorsignal (K_Sig) erzeugt und die Vorrichtung (DVK) die Bewertungsgröße (SQ) aufgrund eines Vergleichs des Sensoreingangssignals (S_Sig) mit dem Kontrollsensorssignal (K_Sig) erzeugt.

3. Steuersystem nach Anspruch 1, **dadurch gekennzeichnet, dass** die Vorrichtung (DVK) die Bewertungsgröße (SQ) aufgrund von Plausibilitätsvergleichen von Sensorsignalen (S_Sig) oder aufbereiteten Sensorsignalen (S_Aus_Sig) mit bekannten Daten erzeugt.

4. Steuersystem nach Anspruch 1, **dadurch gekennzeichnet, dass** die Funktionssteuereinheiten (A, B, C) durch mehrere Steuergeräte realisiert sind, die alle mit dem Datenbus (DB) verbunden sind.

5. Steuersystem nach Anspruch 1, **dadurch gekennzeichnet, dass** Funktionssteuereinheiten (A, B, C) als interne Funktionen eines einzigen Steuergeräts realisiert sind.

6. Steuersystem nach Anspruch 1, **dadurch gekennzeichnet, dass** die wenigstens eine Funktionssteuereinheit (A, B, C) mehrere Funktionskomponenten (FK-A, FK-A', FK-B, FK-C) eines Kraftfahrzeugs steuert.

## Claims

1. Control system for the safe operation of at least one functional component (FK-A, FK-A', FK-B, FK-C)
with at least one function control unit (A, B, C) for triggering the at least one functional component (FK-A, FK-A', FK-B, FK-C),
with at least one sensor (S, KS),
with a data bus (DB) which transmits at least one conditioned sensor signal (S_Aus_Sig) to the at least one function control unit (A, B, C),
an operating mode for the at least one function control unit (A, B, C) in which the at least one functional component (FK-A, FK-A', FK-B, FK-C) can be safely operated being defined from one or more sensor signals (S_Sig, K_Sig),
**characterised in that**
a device (DVK) evaluates the quality of the sensor signals (S_Sig) and generates an evaluation criterion (SQ) representing the safety quality of the sensor signals (S_Sig) and provides this to the data bus (DB),
that the at least one function control unit (A, B, C) controls the at least one functional component (FK-A, FK-A', FK-B, FK-C) in dependency on the currently received value of the at least one conditioned sensor signal (S_Aus_Sig) and the value of the associated evaluation criterion (SQ),
and that the value of the evaluation criterion (SQ) is interpretable by each of the at least one function control units (A, B, C) as a standard-compliant safety integrity level (SIL/ASIL, SIL2/ASILB, SIL3/ASILD).

2. Control system according to Claim 1, **characterised in that** one control sensor (KS) generates a control sensor signal (K_Sig) and the device (DVK) generates the evaluation criterion (SQ) based on a comparison of the sensor signal (S_Sig) with the control sensor signal (K_Sig).

3. Control system according to Claim 1, **characterised in that** the device (DVK) generates the evaluation criterion (SQ) on the basis of plausibility comparisons between sensor signals (S_Sig) or conditioned sensor signals (S_Aus_Sig) and known data.

4. Control system according to Claim 1, **characterised in that** the function control units (A, B, C) are realised by several control units, all of which are connected to the data bus (DB).

5. Control system according to Claim 1, **characterised in that** function control units (A, B, C) are realised as internal functions of a single control unit.

6. Control system according to Claim 1, **characterised in that** the at least one function control unit (A, B, C) controls several functional components (FK-A, FK-A', FK-B, FK-C) of a motor vehicle.

## Revendications

1. Système de commande pour l'exploitation d'au moins un composant fonctionnel (FK-A, FK-A', FK-B, FK-C),
avec au moins une unité de commande fonctionnelle (A, B, C) pour l'excitation du composant fonctionnel (FK-A, FK-A', FK-B, FK-C) au moins prévu,
avec au moins un détecteur (S, KS),
avec un bus de données (DB), qui transmet au moins un signal de détection (S_Aus_Sig) traité à l'au moins une unité de commande fonctionnelle (A, B, C),
sachant que, à partir d'un ou de plusieurs signal / signaux de détection (S_Sig, K-Sig), est déterminé, pour l'au moins une unité de commande fonctionnelle (A, B, C), un mode de fonctionnement, dans lequel l'au moins un composant fonctionnel (FK-A, FK-A', FK-B, FK-C) peut être exploité de manière sûre,
**caractérisé en ce que**
un dispositif (DVK) évalue la qualité des signaux de détection (S_Sig) et génère une valeur d'évaluation (SQ) représentant la qualité de fiabilité desdits signaux de détection (S_Sig) et la délivre au bus de données (DB),
que l'au moins une unité de commande fonctionnelle (A, B, C) commande l'au moins un composant fonctionnel (FK-A, FK-A', FK-B, FK-C) en fonction de la valeur actuellement reçue de l'au moins un signal de détection (S_Aus_Sig) traité et la valeur d'évaluation (SQ) associée.
et que la valeur de la grandeur d'évaluation (SQ) peut être chaque fois interprétée par l'au moins une unité de commande fonctionnelle (A, B, C) en tant qu'un niveau de qualité de fiabilité (SIL/ASIL, SIL2/ASILB, SIL3/ASILD) conforme à la norme.

2. Système de commande selon la revendication 1, **caractérisé en ce qu'**un détecteur de contrôle (KS) génère un signal de contrôle (K_Sig) et que le dispositif (DVK) génère la valeur d'évaluation (SQ) sur la base d'une comparaison du signal d'entrée (S_Sig) avec le signal de contrôle (K_Sig).

3. Système de commande selon la revendication 1, **caractérisé en ce que** le dispositif (DVK) génère la grandeur d'évaluation (SQ) sur la base de comparaisons de plausibilité de signaux de détection (S_Sig) ou de signaux de détection traités (S_Aus_Sig) avec des données connues.

4. Système de commande selon la revendication 1, **caractérisé en ce que** les unités de commande fonctionnelles (A, B, C) sont réalisées par plusieurs appareils de commande, qui sont tous reliés au bus de données (DB).

5. Système de commande selon la revendication 1 **caractérisé en ce que** des unités de commande fonctionnelles (A, B, C) sont réalisées en tant que fonctions internes d'un seul appareil de commande.

6. Système de commande selon la revendication 1 **caractérisé en ce que** l'au moins une unité de commande fonctionnelle (A, B, C) commande plusieurs composants fonctionnels (FK-A, FK-A', FK-B, FK-C) d'un véhicule automobile.
